Europäisches Patentamt

European Patent Office

Office européen des brevets

(19)

(11) Veröffentlichungsnummer: **0 029 174**
**B1**

# (12) EUROPÄISCHE PATENTSCHRIFT

(45) Veröffentlichungstag der Patentschrift:
**31.10.84**

(21) Anmeldenummer: **80106806.5**

(22) Anmeldetag: **05.11.80**

(51) Int. Cl.³: **C 08 F  279/02,** C 08 F  255/06 //
(C08F255/06,
212/06),(C08F279/02, 212/06)

(54) Schlagfeste thermoplastische Formmassen mit erhöhter Spannungsrissbeständigkeit.

(30) Priorität: **20.11.79  DE 2946761**
**19.12.79  DE 2951117**

(43) Veröffentlichungstag der Anmeldung:
**27.05.81 Patentblatt 81/21**

(45) Bekanntmachung des Hinweises auf die Patenterteilung:
**31.10.84 Patentblatt 84/44**

(84) Benannte Vertragsstaaten:
**AT BE CH DE FR GB IT LI NL SE**

(56) Entgegenhaltungen:
**US - A - 3 243 481**
**US - A - 4 144 204**

**Die Akte enthält technische Angaben, die nach dem
Eingang der Anmeldung eingereicht wurden und die
nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Echte, Adolf, Dr., Leuschnerstrasse 42,
D-6700 Ludwigshafen (DE)**
Erfinder: **Gausepohl, Hermann, Dr., Neuweg 10,
D-6704 Mutterstadt (DE)**
Erfinder: **Jenne, Helmut, Dr., Grosser Moench,
D-6905 Schriesheim (DE)**
Erfinder: **Mittnacht, Hans, Dr., Zinkgraefstrasse 44,
D-6940 Weinheim (DE)**

**Beschreibung**

Die Erfindung betrifft thermoplastische Formmassen aus mit Kautschuk schlagfest modifizierten Polymerisaten von monovinylaromatischen Verbindungen, die eine erhöhte Spannungsrißbeständigkeit besitzen.

Es ist bekannt, daß Gebrauchsgegentände aus schlagfest modifizierten Styrolpolymerisaten gegen Spannungsrißkorrosion anfällig sind, sobald sie mit auslösenden Agenzien in Berührung kommen. Als solche kommen zahlreiche organische Medien in Frage; besonders bekannt als spannungsrißauslösende Medien sind dabei einerseits Fette und Öle, andererseits organische Treibmittel, wie z. B. die Fluor und Chlor enthaltenden Halogenkohlenwasserstoffe. Dies macht sich z. B. bei der Herstellung von Kühlmöbeln aus schlagfestem Polystyrol nachteilig bemerkbar. So können Kühlschrankinnenbehälter beim Hinterschäumen mit Polyurethan-Schaum durch das dabei verwendete Halogenkohlenwasserstoff-Treibmittel reißen.

Aus der US-PS 4 144 204 sind thermoplastische Formmassen bekannt, die durch Polymerisation von Vinylaromaten in Gegenwart eines Kautschuks gebildet werden, worin der Anteil der Weichkomponente mindestens 28 Gew.-%, die Teilchen der Weichkomponentenphase einen Durchmesser von mindestens 4 $\mu$ besitzen, der Quellungsindex der Weichkomponente 9,5 ist und die Reißfestigkeit der Formmasse gemessen nach DIN 53 455 mindestens 5% oberhalb der zugehörigen Streckgrenze liegt. Solche Massen sind in hohem Maße spannungsrißbeständig. Wünschenswert ist es jedoch, einzelne weitere Materialeigenschaften zu verbessern.

Aufgabe der vorliegenden Erfindung war es demzufolge, mit Kautschuk schlagfest modifizierte Styrolpolymerisate zu finden und herzustellen, die eine erhöhte Spannungsrißbeständigkeit und weitere verbesserte Materialeigenschaften besitzen.

Die Aufgabe wird durch thermoplastische Formmassen gelöst, die ein mit einem Kautschuk schlagfest modifiziertes Polymerisat einer monovinylaromatischen Verbindung, welches durch Polymerisation der monovinylaromatischen Verbindung in Gegenwart des Kautschuks gebildet wird, worin der Anteil an Weichkomponente in dem schlagfest modifizierten Polymerisat mindestens 28 Gew.-%, bezogen auf das schlagfest modifizierte Polymerisat beträgt, wobei unter Weichkomponente der in Toluol unlösliche Anteil des schlagfest modifizierten Polymerisats abzüglich etwaiger Pigmente verstanden wird und die Reißfestigkeit der thermischen Formmassen, gemessen im Zugversuch nach DIN 53 455 am gepreßten Schulterstab, mindestens 5% oberhalb der zugehörigen Streckgrenze liegt.

Diese Massen sind dadurch gekennzeichnet, daß das Polymerisat durch Copolymerisation einer monovinylaromatischen Verbindung mit 2 bis 12 Gew.-% eines Acryl- oder Methacrylsäurederivates in Gegenwart eines Kautschuks gebildet wird, und daß die Teilchen der dispersen Weichkomponenten-Phase in dem schlagfest modifizierten Polymerisat einen mittleren Durchmesser (Gewichtsmittel) von mindestens 3,5 $\mu$ besitzen und der Quellungsindex der Weichkomponente in Toluol größer ist als 8,0.

Die Herstellung der schlagfest modifizierten Polymerisate kann nach einem beliebigen bekannten Verfahren vorgenommen werden, sofern nur dafür gesorgt ist, daß das oben genannte Eigenschaftsbild erhalten wird. Die meist angewandten Verfahren sind die Polymerisation in Masse oder Lösung auf der Grundlage der US-PS 2 694 692 und ähnlicher Verfahren oder der Masse-Suspensionsprozeß, wie er z. B. in der US-Patentschrift Nr. 2 862 906 beschrieben ist; es sind jedoch auch andere Herstellverfahren anwendbar, sofern sie die oben genannten Eigenschaftsmerkmale einzustellen gestatten.

Als monovinylaromatische Verbindungen kommen dabei insbesondere Styrol in Betracht, ferner die kern- oder seitenkettenalkylierten Styrole, wie z. B. $\alpha$-Methylstyrol und Vinyltoluol, gegebenenfalls auch in Mischung. Vorzugsweise wird jedoch Styrol verwendet. Als Comonomere werden Derivate der Acryl- oder Methacrylsäure in Mengen von 2 bis 12 Gew.-% bezogen auf die Mischung aus monovinylaromatischer Verbindung und Comonomeren verwendet.

Von den Acryl- und/oder Methacrylsäurederivaten, die polar sind, eignen sich z. B. die Ester von Monoalkoholen mit 1 bis 8 Kohlenstoffatomen. Ebenso können Monoester von Dialkoholen verwendet werden. Es eignen sich auch stickstoffenthaltende Derivate wie Amide oder Nitrile. Auch die Säuren selbst können verwendet werden. Besonders geeignet sind die Ester der Methacrylsäure von Alkoholen mit 1 bis 4 Kohlenstoffatomen, insbesondere Methylmethacrylat. Die Comonomeren können allein oder in Mischung mit einem oder mehreren monovinylaromatischen Verbindungen eingesetzt werden.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate des Butadiens und/oder Isoprens mit Styrol und anderen Comonomeren, die eine Glastemperatur unter −20°C besitzen. Diese kautschukartigen Mischpolymerisate des Butadiens und/oder Isoprens können die Monomeren sowohl in statistischer Verteilung als auch blockförmig eingebaut enthalten. Als Kautschukkomponente für die erfindungsgemäßen schlagfest modifizierten Polymerisate eignen sich ferner kautschukelastische Äthylen-Copolymerisate bzw. Äthylen-Propylen-Dien-Terpolymerisate, Silikonkautschuke mit ungesättigten Gruppen und andere. Besonders bevorzugt sind Polybutadiene z. B. mit 30 bis 99% cis1.4-Einheiten.

Die Herstellung der schlagfest modifizierten Polymerisate mit dem erfindungsgemäßen Eigenschaftsbild geschieht durch Copolymerisation des Monomerengemisches in Gegenwart des Kautschuks. Die Polymerisation erfolgt, wie erwähnt, dabei in der Regel in an sich bekannter Weise in Masse, Lösung oder wäßriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gew.-%, bezogen auf die eingesetzten Monomeren eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Äthylbenzol, die Xylole oder Gemische dieser Verbindungen.

Bei der Polymerisation in wäßriger Dispersion wird i. a. auf den Zusatz von Lösungsmitteln verzichtet; eine besonders günstige Ausführungsform besteht darin, die Lösung des Kautschuks in den Monomeren bis zu einem Umsatz von etwa 30% in Masse unter Einwirken von Scherkräften vorzupolymerisieren, diese Reaktionsmasse dann in Wasser zu suspendieren und anschließend auszupolymerisieren. Im allgemeinen wird dieses Verfahren unter Zugabe öllöslicher, in Radikale zerfallender Initiatoren wie Benzoylperoxid, Dicumylperoxid, Di-ter.-butylperoxid, Azo-diisobutyronitril u. ä. oder Kombinationen davon ausgelöst, doch kann die Vorpolymerisation auch thermisch gestartet werden. Als Suspendiermittel dienen bekanntlich wasserlösliche Substanzen, wie Methylcellulose, Oxypropylcellulose, Polyvinylalkohol, teilverseifte Polyvinylacetate usw. oder anorganische Dispersionen, z. B. von Bariumsulfat. Die Suspendiermittel werden im allgemeinen in Mengen von 0,1 bis 5 Gew.-%, bezogen auf die organische Phase, eingesetzt.

Bei der Polymerisation in Masse oder Lösung wird in der Regel in einem Temperaturbereich zwischen 50 und 250° C, vorzugsweise 100 bis 200° C polymerisiert. Der Polymerisationsansatz muß dabei mindestens im ersten Abschnitt der Polymerisation, d. h. bis zu Umsätzen der Gemische aus monovinylaromatischen Verbindungen und Comonomeren gleich oder kleiner 35 Gew.-% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci. 14 (1974) 1, S. 1—11; sowie in den US-Patentschriften 2 694 692 und 2 862 906, auf die wegen weiterer Einzelheiten verwiesen werden soll.

Unter Weichkomponente im Sinne dieser Erfindung wird der bei Raumtemperatur (25° C) in Toluol unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in 2 Phasen, von denen die eine, eine Lösung des Kautschuks in den Monomeren zunächst die kohärente Phase bildet, während die zweite, eine Lösung des Copolymerisates in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Copolymerisatlösung aus; diese Tropfen halten aber ihrerseits kleinere Tropfen der jetzt äußeren Phase eingeschlossen fest.

Neben diesem Vorgang läuft eine Pfropfreaktion ab, bei der chemische Verknüpfungen zwischen den Kautschukmolekülen und dem Copolymerisat unter Bildung von Pfropf-Copolymeren aus beiden Bestandteilen gebildet werden. Dieser Vorgang ist bekannt und z. B. bei Fischer, Die Angew. Makrom. Chem. 33 (1973) S. 35—74, ausführlich dargestellt. Sowohl der aufgepfropfte als auch der mechanisch eingeschlossene Anteil des Copolymeren in den Kautschukteilchen ist zur Weichkomponente zu rechnen.

Wenn die Masse ganz durchpolymerisiert ist, ist so eine in eine harte Matrix aus dem Copolymerisat eingelagerte heterogene Weichkomponente entstanden, die aus gepfropften Kautschukteilchen mit Einschlüssen aus Matrixmaterial (Copolymerisat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung besonders vor und während der Phaseninversion. Die Einzelmaßnahmen sind prozeßspezifisch und dem Fachmann bekannt (s. z. B. Freeguard, Brit. Polym. J. 6, (1974) 205—228; Wagner, Robeson, Rubber Chem. Techn. 43 (1970) 1129ff.).

Um zu schlagfesten thermoplastischen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagfest modifizierten Polymerisat mindestens 28 Gew.-%, vorzugsweise 30 Gew.-% und mehr, bezogen auf das schlagfest modifizierte Polymerisat, beträgt. Die Obergrenze des Weichkomponentengehaltes ist durch die Forderung, daß das Copolymerisat die kohärente Phase bilden muß, zu etwa 50—60 Gew.-% gegeben. Für die erfindungsgemäßen thermoplastischen Formmassen hat sich dabei ein Weichkomponenten-Gehalt von 30 bis 40 Gew.-%, bezogen auf das schlagfest modifizierte Polymerisat, als besonders günstig erwiesen. Der Kautschuk-Anteil des schlagfest modifizierten Polymerisats beträgt

3

dann im allgemeinen zwischen 2 und 15 Gew.-%, vorzugsweise von 5 bis 12 Gew.-%.

Wie dargelegt und hinreichend bekannt, bestehen die schlagfest modifizierten Copolymerisate der Gemische aus monovinylaromatischen Verbindungen und Derivaten der Acryl- oder Methacrylsäure aus einer einheitlichen umhüllenden Phase (Matrix) aus dem Copolymerisat, in die als disperse Phase die Kautschukteilchen der Weichkomponente eingebettet sind, wobei Kautschuk-Teilchen partiell vernetzt und in mehr oder weniger starkem Maße während der Polymerisation durch die Comonomeren gepfropft worden sind.

Die Teilchengröße dieser Kautschukpartikel in der dispersen Weichkomponente muß zur Erzielung einer guten Beständigkeit gegen Spannungsrißkorrosion bei den schlagfest modifizierten Polymerisaten erfindungsgemäß oberhalb des Optimums für hochschlagfeste Produkte liegen.

In den schlagfest modifizierten Produkten mit guter Spannungsrißbeständigkeit gemäß der vorliegenden Erfindung muß jedoch der mittlere Teilchendurchmesser (Gewichtsmittel) der Partikel der dispersen Kautschukphase mindestens 3,5 µ, vorzugsweise mindestens 4 µ, betragen. Am günstigsten ist es, wenn der mittlere Teilchendurchmesser der die Weichkomponente bildenden, dispersen Kautschukpartikel in den schlagfest modifizierten Polymerisaten zwischen 5 und 10 µ liegt. Die Bestimmung der mittleren Teilchengrößen der Kautschukpartikel in der dispersen Weichkomponente kann z. B. durch Auszählung und Auswertung elektronenmikroskopischer Dünnschichtaufnahmen der schlagfest modifizierten Polymerisate erfolgen (vgl. F. Lenz, Zeitschrift f. Wiss. Mikroskopie 63 (1956) S. 50/56). Die Einstellung der Teilchengröße der dispersen Weichkomponenten-Phase erfolgt dabei in an sich bekannter Weise bei der Copolymerisation der Monomeren durch Anpassen der Rührgeschwindigkeit im ersten Abschnitt der Polymerisation, d. h. bis zu einem Umsatz der Monomeren von gleich oder kleiner 35%. Dabei ist die Teilchengröße der dispersen Weichkomponenten-Phase um so größer je kleiner die Rührerdrehzahl und damit je kleiner die Scherbeanspruchung ist. Der Zusammenhang zwischen der Rührgeschwindigkeit und der Größe und Verteilung der Kautschukteilchen im resultierenden schlagfesten Polymerisat ist z. B. in der zitierten Arbeit von Freeguard beschrieben, auf welche hinsichtlich weiterer Einzelheiten verwiesen wird. Die betreffende notwendige Rührgeschwindigkeit zur Erzielung der gewünschten Teilchengröße der dispersen Weichkomponenten-Phase hängt u. a. von den jeweiligen Apparateverhältnissen ab und ist dem Fachmann bekannt bzw. läßt sich durch ein paar einfache Versuche bestimmen.

Ein weiteres wesentliches Merkmal der vorliegenden Erfindung ist es, daß der Quellungsindex der Weichkomponente in Toluol nach der Polymerisation der monovinylaromatischen Verbindungen größer ist als 8,0, vorzugsweise nicht größer als 15.

Der Quellungsindex wird in einem Verfahrensgang mit der Bestimmung des Weichkomponentenanteils ermittelt. Hierzu wird das Polymerisat bei Raumtemperatur (25°) in Toluol gelöst, der unlösliche Gelanteil bei 30 000 g abgeschleudert und nach Dekantieren der Lösung isoliert, feucht gewogen, getrocknet und wieder gewogen.

Der Quellungsindex ist als das Verhältnis

$$Q = \frac{\text{Naßgewicht des Gels}}{\text{Trockengewicht des Gels}}$$

definiert. Er ist als eine reziproke Gewichtskonzentration zu verstehen und gibt die Fähigkeit wieder, mehr oder weniger große Mengen Lösungsmittel zu binden. Daher ist er ein Maß für den Vernetzungszustand des Kautschukanteils in der Weichkomponente. Je größer der Quellungsindex ist, um so geringer ist die Vernetzungsdichte der Kautschukphase. Der Zahlenwert des Quellungsindex hängt vom Lösungsmittel ab; die in dieser Erfindung verwendeten Zahlenwerte beziehen sich auf Toluol.

Der Weichkomponentenanteil wird ebenfalls in Toluol gemessen; er wird wiedergegeben durch das Verhältnis

$$G = \frac{\text{Trockengewicht des Gels}}{\text{Einwaage an Polymeren}} \cdot [100 \text{ Gew.-\%}].$$

Dieser Weichkomponentenanteil (auch »Gelgehalt«) muß erfindungsgemäß höher liegen als 28%. Die obere Grenze richtet sich nach der Forderung, daß die Hartkomponente kohärent sein soll; sie soll 50% nicht überschreiten. Die Forderung nach optimalem Quellungsindex kann in bekannter Weise durch betriebliche Maßnahmen erfüllt werden, die sich nach dem jeweiligen Herstellverfahren richten. Üblicherweise stellt man ihn durch geeignete Wahl der Temperatur bei der Aufarbeitung der Polymerisate und/oder Zusatz von vernetzenden Hilfsstoffen wie Peroxiden u. ä. ein. Vorzugsweise soll der Quellungsindex zwischen 11 und 13 liegen.

Schließlich muß erfindungsgemäß die Reißfestigkeit bei den fertigen Produkten mindestens 5%, vorzugsweise 10 bis 50% und insbesondere 10 bis 40% über der zugehörigen Streckgrenze liegen. Dazu werden Reißfestigkeit und Streckgrenze der thermoplastischen Formmassen nach DIN 53 455 am gepreßten Schulterstab gemessen, die Differenz $\Delta\sigma$ beider Meßwerte gebildet und dieser auf den Meßwert der Streckgrenze bezogen:

# 0 029 174

$$S = \frac{\Delta \sigma}{\sigma} = \frac{\text{Reißfestigkeit} - \text{Streckgrenze}}{\text{Streckgrenze}} \cdot [100\%].$$

Diese erfindungsgemäße Forderung ist gewöhnlich erfüllt, wenn die mit Kautschuk schlagfest modifizierten Polymerisate der monovinylaromatischen Verbindungen — wie es erfindungsgemäß gefordert wird — einen Weichkomponentenanteil von mindestens 28 Gew.-% besitzen und höchstens 50% und der Quellungsindex der Weichkomponente über 8,0 und unter 15 liegt.

Jedoch kann das Verhältnis von Reißfestigkeit zur Streckgrenze durch die üblichen Zusatzstoffe, insbesondere Schmiermittel und Farbstoffe, beeinflußt werden. So ist es möglich, allein durch Zusatz zu großer Mengen Schmiermittel das Verhältnis von Reißfestigkeit zu Streckgrenze so zu verändern, daß die Reißfestigkeit niedriger als die zugehörige Streckgrenze liegt. Dabei ist auch die Art des verwendeten Schmiermittels von entscheidender Bedeutung. In einem solchen Fall besitzen die fertigen Produkte nicht mehr die gewünschte Beständigkeit gegen Spannungsrißkorrosion. Es muß also bei der Herstellung der erfindungsgemäßen thermoplastischen Formmassen darauf geachtet werden, daß die üblichen Zusatzstoffe, insbesondere Schmiermittel und Farbstoffe, nach Art und Menge so ausgewählt werden, daß im Endprodukt die Reißfestigkeit höher liegt als die zugehörige Streckgrenze. In diesem Sinne sind bekannte unpolare Schmiermittel wie Mineralöl besser geeignet als bekannte polare Schmiermittel wie Butylstearat.

Die thermoplastischen Formmassen der vorliegenden Erfindung besitzen neben den sonstigen guten mechanischen und anwendungstechnischen Eigenschaften von schlagfest modifizierten Polymerisaten eine erheblich verbesserte Beständigkeit gegen Spannungsrißkorrosion. Sie eignen sich daher hervorragend insbesondere zur Herstellung von Kühlmöbelteilen und Lebensmittel-Verpackungsbehältern. Sie zeichnen sich insbesondere durch eine gute Lösungsmittelbeständigkeit, Schaumhaftung, Dauerstandfestigkeit sowie eine gute Fließfähigkeit und Grundschlagzähigkeit aus.

Die Erfindung wird durch die nachfolgenden Beispiele erläutert. Die angegebenen Teile und Prozente beziehen sich dabei, sofern nicht anders erwähnt, auf das Gewicht. Die Prüfung der Produkte erfolgte nach folgenden Methoden:

1. Reißfestigkeit ($N/mm^2$) und Streckgrenze ($N/mm^2$) wurden am gepreßten Schulterstab nach DIN 53 455 bestimmt.
2. Der Weichkomponentenanteil (Gelgehalt) wurde ermittelt durch Herstellung einer 5,7%igen Lösung des Polymerisats im Toluol, Abschleudern des unlöslichen Gels bei 30 000 g, Dekantieren der überstehenden Lösung und Trocknen des Rückstandes (Gel). Berechnung des Gelgehaltes erfolgt nach der oben angegebenen Gleichung.
3. Der Quellungsindex ergibt sich aus Naßgewicht und Trockengewicht bei der Gelgehaltsbestimmung nach der weiter oben angegebenen Gleichung.
4. Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtausnahmen. Mit den Volumina der Teilchen (3. Potenz des scheinbaren Durchmessers) innerhalb der Intervalle wird die Verteilungssummenkurve bestimmt. Beim 50%-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.
5. Die Beständigkeit gegen Spannungsrißkorrosion wurde wie folgt gemessen:

   a) Beständigkeit gegen Fett: Sie wurde geprüft nach DIN 53 444 durch Bestimmung der Bruchspannung ($kp/cm^2$) im Medium Olivenöl/Ölsäure 1 : 1 bei 23°C. Dabei soll nach den Anforderungen der Praxis die Bruchspannung für 100 Stunden Belastung nicht unter 38 bis 40 $kp/cm^2$ liegen.
   b) Beständigkeit gegen niedrigsiedende Halogenkohlenwasserstoffe: Sie wurde ermittelt durch Prüfung der Dehnung nach DIN 53 455 am gepreßten Schulterstab nach 50 min Lagerung in definierter vorgespannter Form in einer Atmosphäre der niedrigsiedenden Halogenkohlenwasserstoffe im Vergleich zur unbehandelten Probe. Hierbei darf die Dehnung nicht unter 75% des Ausgangswertes abfallen.

In den folgenden Beispielen werden Produkte, die nur einen Teil der erfindungsgemäß zu fordernden Eigenschaftsmerkmale erfüllen mit erfindungsgemäßen Produkten verglichen.

Die Produkte wurden in Masse-Suspension (S) analog US-PS 2 862 906 hergestellt. Der eingesetzte Kautschuk war in allen Fällen Polybutadien mit 35% cis-1.4, 55% trans-1.4 und 10% 1.2-Vinyl-Konfiguration; das eingesetzte Monomere war Styrol. Alle Produkte enthielten 0,1 Gew.-% Di-tert.-butyl-p-Kresol als Antioxydans. Als Schmiermittel wurde Mineralöl (dickflüssiges Paraffinöl DAB 7) eingesetzt. Nähere Einzelheiten sind den folgenden Tabellen zu entnehmen. Die in den Beispielen genannten Teile und Prozente beziehen sich auf das Gewicht.

5

## Beispiel 1

Eine Mischung von 11,2 Teilen eines Polybutadiens mit 10% 1.2-Vinyleinheiten, 11,2 Teilen Äthylhexylacrylat, 116,2 Teilen Styrol, 0,14 Teilen Paraffinöl, 0,014 Teilen tert.-Dodecylmercaptan und 0,014 Teilen Dicumylperoxid wurde bei einer Polymerisationstemperatur von 115°C in einem 5-l-Reaktor auf einen Feststoffgehalt von 39,5% vorpolymerisiert. Die Rührgeschwindigkeit betrug 50 Upm. Anschließend wurde die Masse in 1800 g einer wäßrigen Lösung, die 9 g Polyvinylpyrrolidon als Suspendierhilfsmittel enthielt, suspendiert und bei einer Rührgeschwindigkeit von 250 Upm nacheinander 3 h bei 110°C, 3 h bei 120°C und 4 h bei 140°C polymerisiert. Die Perlen wurden gewaschen, getrocknet und auf einem Extruder konfektioniert.

Gelgehalt: 32,6%,
Quellungsindex in Toluol: 9,7,
VZ: 70,2 ml/g (gemessen bei 23°C/Toluol),
mittlerer Teilchendurchmesser: 4,8 µm.

$$S = \frac{\Delta\sigma}{\sigma} = 18\%.$$

Die Spannungsrißbeständigkeit wurde anhand der Dehnungsabnahme in einer Frigen®-11-Atmosphäre gemessen. Die relative Abnahme der Dehnung betrug im vorliegenden Fall bei einer 50minütigen Lagerung in Frigen® — 11 12%, die Restdehnung also 88%.

## Beispiel 2 (Vergleichsbeispiel)

Beispiel 1 wurde mit dem Unterschied wiederholt, daß in der Vorpolymerisation mit einer Geschwindigkeit von 200 Upm gerührt wurde. Dadurch entstehen kleinere Kautschukteilchen.

Gelgehalt: 30,5%,
Quellungsindex in Toluol: 9,8;
VZ: 73 ml/g;
mittlerer Teilchendurchmesser: 3,0 µm.

$$S = \frac{\Delta\sigma}{\sigma} = 16\%.$$

Abnahme der relativen Dehnung in Frigen® nach 50minütiger Lagerung: 88%, Restdehnung also 12%.

Dieses Beispiel zeigt deutlich, daß die Kautschukteilchen eine Mindestgröße besitzen müssen, damit das Produkt spannungsrißbeständig ist.

## Beispiel 3

Beispiel 1 wurde mit dem Unterschied wiederholt, daß Methylmethacrylat eingesetzt wurde.

Gelgehalt: 33,4;
Quellungsindex in Toluol: 12,9;
mittlerer Teilchendurchmesser: 5,3 µm.

$$S = \frac{\Delta\sigma}{\sigma} = 25\%,$$

relative Abnahme der Dehnung in Frigen® nach 50minütiger Lagerung: 8%,
Restdehnung also 92%.

## Beispiel 4

Anstelle von Äthylhexylacrylat im Beispiel 1 wurde Butylacrylat verwendet.

Gelgehalt: 33,8%;
Quellungsindex in Toluol: 12,4;
mittlere Teilchendurchmesser: 5,6 µm.

$$S = \frac{\varDelta \sigma}{\sigma} = 19\%.$$

Abnahme der relativen Dehnung in Frigen®: 13%,
Restdehnung: 87%.

### Beispiel 5

Eine Mischung von 10 Teilen Kautschuk, 10 Teilen Methacrylsäuremethylester, 1,5 Teilen Mineralöl und 78,5 Teilen Styrol sowie 0,1 Teile tert.-Dodecylmercaptan, 0,1 Teile Dicumylperoxid und Antioxidans wurde bei 110° C unter Rührung auf einen Feststoffgehalt von 33,0% polymerisiert. Anschließend wurde die Masse wie üblich in Suspension auspolymerisiert.

| | |
|---|---|
| Steckspannung: | 17,6 [n · mm$^{-2}$] Reißfestigkeit [19,1] N · mm$^{-2}$ |
| Mittlere Teilchengröße: | 3,6 µ |
| Quellungsindex: | 8,5 |
| Gelgehalt: | 34%. |

Die Spannungsrißbeständigkeit wurde anhand der Dehnungsabnahme nach einer Lagerung in Frigen®-11 bei 1 bar gemessen. Nach einer 50minütigen Lagerung betrug die Restdehnung 82%.

**Patentansprüche**

1. Thermoplastische Formmassen, enthaltend ein mit einem Kautschuk schlagfest modifiziertes Polymerisat einer monovinylaromtischen Verbindung, welches durch Polymerisation der monovinylaromatischen Verbindung in Gegenwart eines Kautschuks gebildet wird, worin der Anteil an Weichkomponente in dem schlagfest modifiziertes Polymerisat mindestens 28 Gew.-%, bezogen auf das schlagfest modifizierte Polymerisat, beträgt, die Teilchen der dispersen Weichkomponenten-Phase in dem schlagfest modifizierten Polymerisat einen mittleren Durchmesser (Gewichtsmittel) von mindestens 3,5 µ besitzen, der Quellungsindex der Weichkomponente in Toluol größer als 8,0 ist, und die Reißfestigkeit der thermoplastischen Formmassen, gemessen im Zugversuch nach DIN 53 455 am gepreßten Schulterstab, mindestens 5% oberhalb der zugehörigen Streckgrenze liegt, dadurch gekennzeichnet, daß das Polymerisat durch Copolymerisation einer monovinylaromatischen Verbindung mit 2—12 Gew.-% eines Acryl- oder Methacrylsäurederivates in Gegenwart eines Kautschuks gebildet wird.

2. Thermoplastische Formmassen nach Anspruch 1, dadurch gekennzeichnet, daß das Polymerisat durch Copolymerisation von Styrol mit Acrylsäureestern von Monoalkoholen mit 1 bis 8 Kohlenstoffatomen gebildet worden ist.

3. Thermoplastische Formmassen nach Anspruch 1, dadurch gekennzeichnet, daß das Polymerisat durch Copolymerisation von Styrol mit Methacrylsäureestern von Monoalkoholen mit 1 bis 8 Kohlenstoffatomen gebildet worden ist.

**Claims**

1. A thermoplastic molding material which contains a polymer of a monovinyl-aromatic compound which is formed by polymerizing the said compound in the presence of a rubber and which has hence been made impactresistant with a rubber, the proportion of soft component in the impact-resistant polymer being not less than 28% by weight, the particles of the disperse soft component phase in the impact-resistant polymer having a weight-average mean diameter of not less than 3.5 µm, the swelling index of the soft component in toluene being greater than 8.0, and the tensile strength of the molding material, measured by a tensile test on a molded dumbbell-shaped bar, according to DIN 53 455, being not less than 5% above the corresponding yield strength, wherein the polymer is formed by copolymerizing a monovinyl-aromatic comound with from 2 to 12% by weight of an acrylic acid derivative or methacrylic acid derivative in the presence of a rubber.

2. A thermoplastic molding material as claimed in claim 1, wherein the polymer has been formed by copolymerization of styrene and an ester of acrylic acid with a monoalcohol of 1 to 8 carbon atoms.

3. A thermoplastic molding material as claimed in claim 1, wherein the polymer has been formed by copolymerization of styrene and an ester of methacrylic acid with a monoalcohol of 1 to 8 carbon atoms.

# 0 029 174

## Revendications

1. Masses à mouler thermoplastiques contenant un polymère d'un composé monovinylaromatique qui est modifié par un caoutchouc dans le sens de la résistance aux chocs et qui est formé par polymérisation du composé monovinylaromatique en présence d'un caoutchouc, la proportion du composant souple dans le polymère modifié dans le sens de la résistance aux chocs étant d'au moins 28% en poids sur la base du polymère modifié dans le sens de la résistance aux chocs, les particules de la phase composant souple dispersée dans le polymère modifié dans le sens de la résistance aux chocs ayant un diamètre moyen (moyenne pondérée) d'au moins 3,5 microns, l'indice de gonflement du composant souple dans le toluène étant supérieur à 8,0 et la résistance à la traction des masses à mouler thermoplastiques, mesurée par l'essai de traction suivant la DIN 53 455 sur barreau à épaulement moulé, se situant au moins à 5% au-dessus de la limite d'élasticité correspondante, caractérisées en ce que le polymère est formé par copolymérisation d'un composé monovinylaromatique avec 2 à 12% en poids d'un dérivé de l'acide acrylique ou méthacrylique en présence d'un caoutchouc.

2. Masse à mouler thermoplastiques selon la revendication 1, caractérisées en ce que le polymère a été formé par copolymérisation de styrène avec des acrylates de monoalcools contenant 1 à 8 atomes de carbone.

3. Masses à mouler thermoplastiques selon la revendication 1, caractérisées en ce que le polymère a été formé par copolymérisation de styrène avec des méthacrylates de monoalcools contenant 1 à 8 atomes de carbone.